# EUROPEAN PATENT SPECIFICATION

(11) **EP 3 475 088 B1**
(45) Date of publication and mention of the grant of the patent: **10.11.2021**
(21) Application number: 18741708.4
(22) Date of filing: 22.01.2018
(51) Int. Cl.: G01K 7/42

(54) **GEL BASED ROOM TEMPERATURE INDICATOR USED FOR POWER SAVING**
GELBASIERTER RAUMTEMPERATURINDIKATOR ZUR ENERGIEEINSPARUNG
INDICATEUR DE TEMPÉRATURE AMBIANTE A BASE DE GEL UTILISÉ POUR ÉCONOMISER DE L'ÉNERGIE

(30) Priority: 23.01.2017 IN 201641039599
(43) Date of publication of application: 01.05.2019
(73) Proprietor: Vijayakumar, K. K., Chennai, Tamil Nadu 600054 (IN); Sudhakar, K., Chennai, Tamil Nadu 600054 (IN)
(72) Inventor: Vijayakumar, K. K., Chennai, Tamil Nadu 600054 (IN); Sudhakar, K., Chennai, Tamil Nadu 600054 (IN)
(74) Representative: Forrest, Stuart
(86) International application number: PCT/IN2018/000004
(87) International publication number: WO 2018/134841

(56) References cited:
- WO-A1-2015/042841
- WO-A2-01/98741
- WO-A2-01/98741
- US-A1- 2001 046 451
- US-A1- 2001 046 451
- US-A1- 2007 053 406
- US-A1- 2009 149 772
- US-A1- 2009 149 772
- US-A1- 2013 068 155

## Description

### FIELD OF INVENTION

The present invention relates to the field of refrigeration technology. More particularly, the present invention relates to a temperature indicator. Particularly the present invention relates to a gel-based room temperature indicator used for power saving. Specifically, the said gel comprises constituents such as cellulose gum, propylene glycol, aluminum sulphate, sodium bi carbonate, dowicil 75, methamine and coloring agent. The present invention is used for indicating and resisting the exact temperature in the freezing rooms which is used for saving electricity consumption.

### BACKGROUND OF THE INVENTION

The existing system of domestic refrigerator or commercial temperature control system utilizes more electricity while the door opens and as a consequence the temperature varies in the atmosphere. Further because of this temperature change, there will be a huge wastage of electricity.

A known prior art relates to temperature indicating compositions which display temperature dependent color changes and the temperature indicating material comprises about 0.1 % to about 99.9% by weight or about 15% to about 35% by weight of a temperature indicating clay. Further it also discloses that the indicators or probes can take a variety of forms such as powders, films, surface coatings, wafers, tubes, inks, paints, waxes, gels, and shaped articles (e.g., plates, vessels, containers, caps, etc.) with clay material admixed, suspended, impregnated therein or applied as a surface coating thereto. But the present invention discloses an indicator with gel without any admixture and which is portable and cheap.

WO01/98741 A2 discloses temperature indicating compositions comprising clay materials which display temperature dependent color changes.

WO 2015/042841 A1 discloses a method for providing an indication of a temperature of contents, e.g. human organs, contained within an enclosed volume, e.g. a cool box, which comprises the steps of: providing a temperature measuring apparatus and a control device; and measuring a temperature of the control device within the enclosed volume to provide an indication of the temperature of the contents contained within the enclosed volume. The control device comprises a sealed sachet containing a material (a block of metal, a block of a plastics material, water or a water-based solution, in particular a saline solution). A pocket enables a temperature probe to be securely held against the surface of the control device.

Thus the present invention overcomes the inadequacies of the prior art by providing a gel-based temperature indicator which efficiently saves electricity and also reduces the overuse of compressor.

### OBJECTS OF THE INVENTION

One or more of the problems of the conventional prior art may be overcome by various embodiments of the present invention.

Accordingly, the primary object of the present invention is to provide a gel-based room temperature indicator according to claim 1.

It is another object of the present invention to provide the said gel-based indicator which will reduce the compressor cycle and result in power saving in a huge manner.

It is another object of the present invention to increase the performance and the lifetime of the compressor.

### SUMMARY OF THE INVENTION

The main aspect of the present invention is to provide a gel-based room temperature indicator comprising a gel.

It is one aspect of the present invention, wherein the said gel comprises:
60-85 wt% of water;
10- 30 wt% of propylene glycol;
1-5 wt% of cellulose gum;
0.1-0.5 wt% of aluminum sulphate;
0.05-0.10 wt% of Sodium bi carbonate;
0.1-0.5 wt% of dowicil 75®.
0.01-0.05 wt% of methamine;
0.001-0.005 wt% of 1, 3-dichloropropene and
0.001-0.005 wt% of dichloromethane.

It is another aspect of the present invention, wherein the said constituents are divided into two groups based on their hydrophilic and hydrophobic nature.

It is another aspect of the present invention, wherein the said constituents are mixed together to make the final gel.

It is another aspect of the present invention, wherein the said gel is pouched and packed in a specifically designed polypropylene container.

It is yet another aspect of the present invention, wherein the said indicator is fixed directly to the sensor.

It is one another aspect of the present invention, wherein the said indicator withstands a capacity of the temperature from -30°C to 36°C.

### BRIEF DESCRIPTION OF THE DRAWINGS

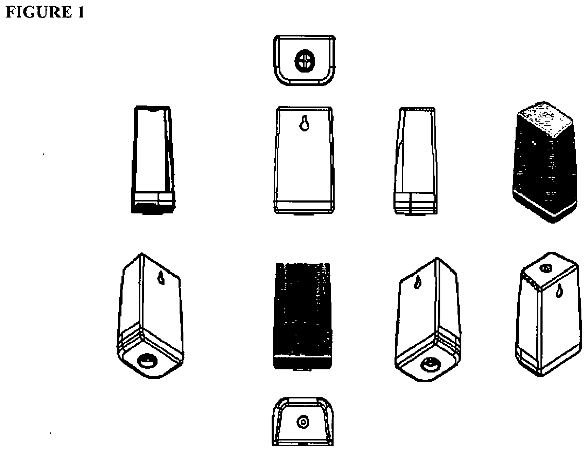

Figure 1 illustrates the indicator, according to the present invention.

### DETAILED DESCRIPTION OF INVENTION WITH REFERENCE TO THE ACCOMPANYING DRAWINGS

The present invention is a gel-based temperature indicator which consistently indicates the room temperature to the compressor through the sensor, wherein the said indicator is illustrated in figure 1. This helps the sensor for proper identification of the room temperature when the door is opened and closed.

The main embodiment of the present invention is a gel, wherein the said gel comprises constituents such as cellulose gum, propylene glycol, aluminum sulphate, sodium bi carbonate, dowicil75, methamine, and a coloring agent and the composition of the constituents of the said gel is given in the table below.

| **S.NO** | **Constituent** | **Weight %** |
|---|---|---|
| 1 | Water | 60-85 |
| 2 | Propylene Glycol | 10-30 |
| 3 | Cellulose gum | 1-5 |
| 4 | Aluminum sulfate | 0.1-0.5 |
| 5 | Dowicil 75® | 0.1-0.5 |
| 6 | Sodium Bicarbonate | 0.05-0.10 |
| 7 | Methenamine | 0.01-0.05 |
| 8 | 1,3-Dichloropropene | 0.001-0.005 |
| 9 | Dichloromethane | 0.001-0.005 |

The said constituents are divided into two groups according to their hydrophilic and hydrophobic nature and then mixed together to make the final gel. The said gel is pouched and packed in a specifically designed polypropylene container.

According to the present invention, the said gel based indicator is affixed into a sensor thus the gel performs efficiently and provides the actual temperature of the stored products instead of the atmosphere air temperature. This will reduce the compressor cycle and results in power saving in a huge manner.

The said gel-based indicator has withstanding capacity of temperature from -30°C to 36°C. Further in the present invention there are no mechanical or structural alterations required in the temperature sensor or freezing unit. Thus the invention is easily compatible with different types of products stored in the freezers.

The present invention is installed in the cold storage room (12 ×12 × 8) having storage condition between -23.3°C to -28.9°C and the performance of the indicator is absorbed initially for one year and the efficiency is noted as:
➢ Operating cost reduced by 28.9%
➢ Compressor run hours reduced by 24.2%
➢ Compressor cycle reduced by 63%
➢ Kilowatt hours reduced by 23%
➢ Energy cost reduced by 30%. Thus the total cost saving is 30.3 % for one year.

The present invention is installed in the cold storage room (8 × 8 × 8) having storing condition is between 35°F and 46°F (2°C and 8°C) for storing vaccines. The performance of the indicator is absorbed initially for one year and the efficiency is noted as:
➢ Operating cost reduced by 22.1 %
➢ Compressor run hours reduced by 20.9%
➢ Compressor cycle reduced by 61%
➢ Kilowatt hours reduced by 21%
➢ Energy cost reduced by 28%. Total cost saving is 28.9% for one year.

### Advantages:

It is one advantage of the present invention, wherein the performance of the compressor is increased.

It is another advantage of the present invention, wherein the present invention increases per day cut off time so per day compressors on/off cycles are reduced thereby power consumption and maintenance cost of the compressor is remarkably reduced.

It is one another advantage of the present invention, wherein there is a remarkable increase in the compressor's life time.

It is one advantage of the present invention, wherein products quality is maintained by keeping optimum storage condition of the freezers.

It is yet another advantage of the present invention, wherein the present invention reduces the energy consumption in refrigerator, cooling rooms and freezer rooms.

It is one advantage of the present invention, wherein the present invention reduces 40-60% of CO² emission, thus it is atmospheric friendly.

## Claims

1. Gel-based room temperature indicator comprising: a gel; and a specifically designed polypropylene container; wherein the said gel comprises:
60-85 wt% of water;
10-30 wt% of propylene glycol;
1-5 wt% of cellulose gum;
0.1-0.5 wt% of aluminum sulphate;
0.05-0.10 wt% of sodium bicarbonate;
0.1-0.5 wt% of dowicil 75®;
0.01-0.05 wt% of methamine;
0.001-0.005 wt% of 1, 3-dichloropropene; and
0.001-0.005 wt% of dichloromethane; and
wherein the said indicator is configured to be fixed directly to a temperature sensor.

2. Indicator as claimed in claim 1, wherein the said constituents are divided into two groups based on their hydrophilic and hydrophobic nature.

3. Indicator as claimed in claim 2, wherein the said constituents are mixed to produce the final gel.

4. Indicator as claimed in claim 1, wherein the said gel is pouched and packed in the specifically designed polypropylene container.

5. Indicator as claimed in claim 1, wherein the said indicator withstands a capacity of the temperature from -30° C to 36°C.

## Patentansprüche

1. Gel-basierte Zimmertemperaturanzeige, umfassend:
ein Gel; und
einen spezifisch ausgelegten Polypropylenbehälter;
wobei das Gel Folgendes umfasst:
60-85 Gew.-% Wasser;
10-30 Gew.-% Propylenglykol;
1-5 Gew.-% Cellulosegummi;
0,1-0,5 Gew.-% Aluminiumsulfat;
0,05-0,10 Gew.-% Natriumbikarbonat;
0,1-0,5 Gew.-% Dowicil 75®;
0,01-0,05 Gew.-% Methenamin;
0,001-0,005 Gew.-% 1,3-Dichlorpropen; und
0,001-0,005 Gew.-% Dichlormethan; und
wobei die Anzeige konfiguriert ist, direkt an einem Temperatursensor befestigt zu werden.

2. Anzeige nach Anspruch 1, wobei die Bestandteile auf der Basis ihrer hydrophilen und hydrophoben Natur in zwei Gruppen unterteilt werden.

3. Anzeige nach Anspruch 2, wobei die Bestandteile gemischt werden, um das endgültige Gel zu produzieren.

4. Anzeige nach Anspruch 1, wobei das Gel in Beutel gefüllt und in den spezifisch ausgelegten Polypropylenbehälter verpackt wird.

5. Anzeige nach Anspruch 1, wobei die Anzeige einen Variationsbereich der Temperatur von -30 °C bis 36 °C übersteht.

## Revendications

1. Indicateur de température ambiante à base de gel comprenant :
un gel ; et
un contenant en polypropylène spécifiquement conçu ;
dans lequel ledit gel comprend :
60 à 85 % en poids d'eau ;
10 à 30 % en poids de propylène glycol ;
1 à 5 % en poids de gomme de cellulose ;
0,1 à 0,5 % en poids de sulfate d'aluminium ;
0,05 à 0,10 % en poids de bicarbonate de sodium ;
0,1 à 0,5 % en poids de dowicil 75® ;
0,01 à 0,05 % en poids de méthamine ;
0,001 à 0,005 % en poids de 1,3-dichIoropropène ; et
0,001 à 0,005 % en poids de dichlorométhane ; et
dans lequel ledit indicateur est configuré pour être fixé directement à un capteur de température.

2. Indicateur tel que revendiqué dans la revendication 1, dans lequel lesdits constituants sont divisés en deux groupes sur la base de leur nature hydrophile et hydrophobe.

3. Indicateur tel que revendiqué dans la revendication 2, dans lequel lesdits constituants sont mélangés pour produire le gel final.

4. Indicateur tel que revendiqué dans la revendication 1, dans lequel ledit gel est ensaché et conditionné dans le contenant en polypropylène spécifiquement conçu.

5. Indicateur tel que revendiqué dans la revendication 1, dans lequel ledit indicateur résiste à une capacité de la température allant de -30 °C à 36 °C.
